# EUROPEAN PATENT APPLICATION

(11) **EP 2 884 740 A1**
(43) Date of publication of application: **17.06.2015**
(21) Application number: 13816334.0
(22) Date of filing: 18.06.2013
(51) Int. Cl.: H04N 5/367, H01L 27/14, H04N 5/232, H04N 5/365

(54) **IMAGE PICK-UP DEVICE**

(30) Priority: 10.07.2012 JP 2012154679
(71) Applicant: Sumitomo Electric Industries, Ltd., Osaka-shi, Osaka 541-0041 (JP)
(72) Inventor: KOBAYASHI, Ryoichi, Yokohama-shi Kanagawa 244-8588 (JP); SAITOH, Tatsuhiko, Yokohama-shi Kanagawa 244-8588 (JP); ASAI, Shinji, Yokohama-shi Kanagawa 244-8588 (JP)
(74) Representative: Hoffmann Eitle
(86) International application number: PCT/JP2013/066637
(87) International publication number: WO 2014/010375

(57) **Abstract**

Specifying defective pixels can be done with higher precision. With the imaging apparatus 1, defective pixels are specified after NUC process with respect to initial good pixels, as well as correction with respect to initial defective pixels, has been done, and therefore it is possible to specify defective pixels with higher precision as compared with the case where defective pixels are specified without carrying out the NUC process and correction with respect to initial defective pixels. In addition, captured-image data acquired by defective pixels other than the initial defective pixels can be corrected in the controlling means 40, because pixels in which defect other than the initial defect is caused can be specified by specifying defective pixels after corrected captured-image data has been generated in a manner such that captured-image data which is acquired by the image capturing unit 10 is corrected on the basis of information for specifying an initial defective pixel.

## Description

### FIELD OF THE INVENTION

The present invention relates to an imaging apparatus.

### DESCRIPTION OF THE BACKGROUND ART

An imaging apparatus for capturing a still image or moving image includes an imaging device (image sensor) having a plurality of image pixels arranged in a matrix and is capable of electric signals which are converted from incident light from an imaging target. There is a case where the plurality of pixels constituting the imaging device includes a defective pixel whose sensitivity to the intensity of incident light is not normal or a defective pixel which exhibits a large drift of sensitivity, etc. On this problem, Japanese Patent Application Publication No. H7-212658 discloses a structure for detecting a defective pixel and carrying out correction thereon when the power source is put on an imaging apparatus.

### SUMMARY OF THE INVENTION

### Object of the Invention

An object of the present invention is to provide an imaging apparatus which can specify, with higher accuracy, a defective pixel included in an imaging device.

### Means for achieving the object

To achieve the object, provided is an imaging apparatus which comprises: (1) an image capturing unit consisting of a plurality of pixels arranged in a matrix and capable of outputting a captured-image data made of output data of each pixel, wherein the output data is made by receiving light and carrying out optical-to-electrical conversion thereof; (2) an initial information storing means (first memory) which can memorize information for specifying an initial defective pixel among a plurality of pixels and Non-Uniformity Correction (NUC) information of an initial good pixel; (3) a correction means (correction unit) for converting the output data into a corrected output data according to the information for specifying an initial defective pixel and the NUC information and making a corrected captured-image data consisting of the corrected output data; and (4) a means for specifying a defective pixel (specifying unit) which can specify a defective pixel different from the initial defective pixel according to the corrected captured-image data. Here, the NUC information means a light intensity division and a correction value of sensitivity which are used for performing NUC process.

In the imaging apparatus of the present invention, the image capturing unit may have a thermometer for measuring temperature in the circumference of a plurality of pixels and outputting the results of such measurement and a temperature regulator for making temperature adjustment according to the results of the measurement. The term "circumference of a pixel" means a part which is physically in contact with an imaging device consisting of a plurality of pixels and whose temperature is nearly the same as the imaging device: for example, an IC for reading out an image signal (ROIC: Readout Integrated Circuit), etc.; and for the purpose of measuring the temperature, the temperature measuring function provided in the ROIC can be used. The imaging apparatus may further include a defect information storing means (second memory) for memorizing information regarding a defective pixel, and writing into the first memory may be forbidden.

Also, in the imaging apparatus of the present invention, the specifying unit for specifying a defective pixel that is different from an initial defective pixel may be constituted such that the defective pixel is specified on the basis of corrected captured-image data made by correcting a captured-image data outputted when a plurality of pixels are shaded (dark data). In this case, the specifying unit may be configured to calculate the average value of corrected output data of all pixels contained in the corrected captured-image data, calculates a difference between the average value and the corrected output data of the respective pixels in the corrected output-image data, and specifies a pixel as the defective pixel if the difference exceeds a predetermined threshold value. Also, the specifying unit may be constituted such that if the variation range of corrected output data in the same pixel among a plurality of corrected captured-image data exceeds a predetermined threshold value, such pixel is specified as a defective pixel.

As another aspect of the invention, an image capturing method is offered, the method comprising steps of: receiving light from an imaging target by a plurality of pixels that are optical-to-electrical conversion devices arranged in a matrix; interpolating, with the output data of the respective adjoining good pixel, an output data of an initial defective pixel among the plurality of pixels and an output data of a defective pixel that is different from the initial defective pixel and is specified on the basis of a corrected captured-image data consisting of the corrected output data that is converted from the output data according to the information for specifying the initial defective pixel and NUC information of an initial good pixel; and outputting the captured-image data thus interpolated.

### Effect of the invention

An imaging apparatus provided according to the present invention can specify a defective pixel included in an imaging device with higher accuracy.

### BRIEF DESCRIPTION OF DRAWINGS

Fig. 1 is a block diagram of an imaging apparatus relating to the embodiment of the present invention.
Fig. 2 is a graph explaining an example in which data outputted from pixels in an imaging apparatus relating to the embodiment of the present invention is corrected by NUC process.
Fig. 3 is a flow chart explaining a method for specifying a pixel having post-shipment defect in the imaging apparatus relating to the embodiment of the present invention.
Fig. 4 is a histogram showing output distribution in all pixels in terms of "with NUC process" and "without NUC process".

### DETAILED DESCRIPTION OF THE INVENTION

Embodiments of the present invention are described below in reference to the drawings. The drawings are provided for the purpose of explanation and not intended to limit the scope of the invention. In the drawings, an identical mark shows the same part so as to avoid duplication of explanation. The dimensional ratio in the drawings is not necessarily exact.

There are cases where an imaging apparatus is used for inspecting a defect in goods of imaging target. In the case where the imaging apparatus is used for the purpose of inspection of defective goods, higher accuracy is needed to specify a defective pixel included in the imaging device and appropriate correction must be done against it.

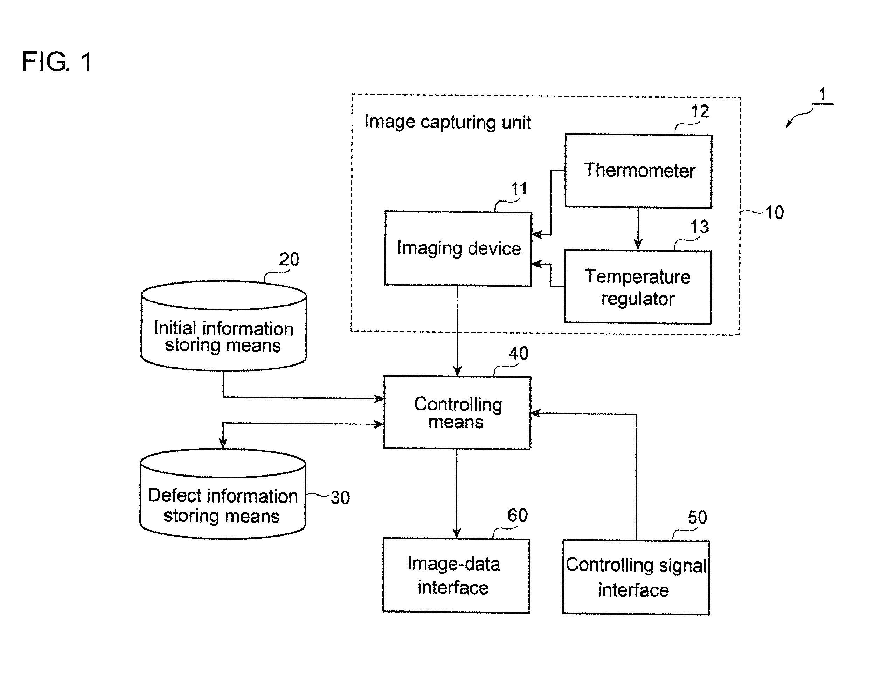

Fig. 1 is a block diagram of an imaging apparatus 1 relating to an embodiment of the present invention. The imaging apparatus 1 comprises an image capturing unit 10, an initial information storing means (first memory) 20, a defect-information storing means (second memory) 30, a controlling means 40, a controlling signal interface 50, and an image-data interface 60. The image capturing unit 10 has an imaging device 11 for capturing an image of an imaging target and outputs captured-image data, a means (thermometer) 12 for measuring temperature, and a means (temperature regulator) 13 for controlling temperature.

The imaging device 11 is composed of an image sensor consisting of pixels which are a plurality of optical-to-electrical conversion devices arranged in a matrix. The respective pixels of the imaging device 11 carry out optical-to-electrical conversion of light incident from the imaging target and the output-data to be outputted is changed according to the intensity of incident light. And, a captured-image data is constituted by combining the output data of each pixel. The imaging device 11 captures an image according to an instruction from the controlling means 40. And, the captured-image data is sent from the imaging device 11 to the controlling means 40.

The thermometer 12 functions to measure temperature in the circumference of the imaging-device 11. The temperature regulator 13 functions to adjust the temperature in the circumference of the imaging-device 11 on the basis of the results of measurement by the thermometer 12. There are cases where the imaging device 11 is cooled for use since the imaging device 11 has a large dark current at normal temperature. In such a case, a Peltier device, a fan, or the like is used as the temperature regulator 13, and a mechanism is provided for controlling temperature in the circumference of the imaging device 11 to a predetermined temperature range (temperature at which the dark current of the imaging device 11 decreases) according to the result of measurement by the thermometer 12 such as a thermocouple, etc.

In addition, the controlling means 40 may be structured to bear the function of the temperature regulator 13. The controlling means 40 may be designed such that the controlling means 40 instructs the imaging device 11 to start image-capturing when the controlling means 40 as mentioned below is notified with the result of measurement by the thermometer 12 and the controlling means 40 has confirmed that the temperature in the circumference of the imaging device 11 has fallen within a predetermined range.

The imaging apparatus 1 is structured not only to correct an initial defective pixel having a defect generated before shipment, but also to carry out correction by specifying a pixel in which a defect occurs after shipment. An explanation regarding defects generated in pixels and the method of correcting them will be given later.

The first memory 20 is a means to memorize correction information relating to an initial defective pixel discovered before shipment and NUC information of an initial good pixel. The correction relating to the initial defective pixel includes information for specifying a pixel in which a defect is generated and information for correcting the defect in the pixel. The correction information and the NUC information of an initial good pixel, which are stored in the first memory 20, are provided according to demand from the controlling means 40 when an image is captured using the image capturing unit 10, and they are used for correction of the captured-image data in the controlling means 40.

The second memory 30 is a means for memorizing information relating to a defective pixel discovered after shipment. The information to be saved in the second memory 30 are information for specifying a pixel that is judged by the controlling means 40 to be a pixel having post-shipment defect and information for correcting the output data outputted from such pixel. The information saved in the second memory 30 is updated whenever investigation relating to the pixel having post-shipment defect is conducted by the controlling means 40, and it is supplied to the controlling means 40 according to the demand from the controlling means 40.

The controlling means 40 functions to output after making desired correction of the captured-image data obtained in the image capturing unit 10. More specifically, a corrected captured-image data is made by correcting a captured-image data based on the information stored in the first memory 20. The corrected captured-image data is composed including the corrected output data of each pixel. Furthermore, the pixel having post-shipment defect is specified by using the corrected captured-image data. That is, the controlling means 40 has the function of correction unit and means for specifying a defective pixel (specifying unit). The process for specifying a defective pixel by the controlling means 40 is started according to a start signal from the controlling signal interface 50, and the captured-image data in which correction of the defective part is done is sent to the image-data interface 60.

The controlling signal interface 50 functions to transmit a start signal for the process of specifying a defective pixel. The instruction relating to the start of specifying a defective pixel is accomplished by the user of the imaging apparatus 1, for example, by inputting the content of instruction to the controlling signal interface 50. The controlling signal interface 50 transmits the start signal for the process of specifying a defective pixel to the controlling means 40 according to the instruction from the user. Also, instead of the above-mentioned structure in which a user carries out an instruction relating to specify a defective pixel, the structure may be such that the user's start of operation of the imaging apparatus 1 triggers the controlling signal interface 50 to transmit a start signal to the controlling means 40. In addition, it may be programmed beforehand to perform the process of specifying a defective pixel at a fixed interval.

The image data interface 60 functions to output the captured-image data which has been corrected by the controlling means 40. After a defective pixel is specified, the captured-image data in which the correction relating to such pixel has been done is sent by the controlling means 40 to the image data interface 60. Upon receipt of captured-image data from the controlling means 40, the image data interface 60 outputs it to predetermined output places (PC, monitor, printer, etc.).

Here, an explanation of defect in the imaging device 11 contained in the image capturing unit 10 will be given. Defects might occur in respective pixels in the imaging device 11. Examples of defect in the imaging device 11 includes variation with respect to the relation between the intensity of incident light and output data from pixels, variation in output data of pixels at dark, abnormalities of sensitivity to the intensity in output data, and defect caused by drift in output data, etc. When a defective pixel is contained in the pixels of the imaging device 11, captured-image data obtained in the imaging device 11 includes a noise due to the defective pixel, causing a problem of affecting the quality of captured-image data. These defects occur after shipment, as well as before shipment and after manufacture, of an imaging apparatus.

As to defects which have occurred before shipment, it is possible to check in an inspection before shipment. That is, the following structure is adopted: with respect to defective pixels found in the inspection before shipment, such as those which exhibit variation in output data in comparison with other pixels and those which have abnormalities in sensitivity, correction information for correcting output data relating to the pixels is stored in the imaging apparatus at the time of shipment, and at the time of using the imaging apparatus, the captured-image data is corrected using the correction information thus stored.

On the other hand, there are cases where a defect of pixels occurs after shipment. For example, defects might occur when the imaging apparatus 1 is repeatedly used in an environment, such as low-temperature environment, which tends to put load onto the imaging device 11, or when it suffers from a physical shock. As to the defects of pixels which occur after shipment, it is naturally impossible to grasp them before shipment. Consequently, the correction using the correction information stored in the imaging apparatus before shipment cannot be applied. Therefore, when actually using the imaging apparatus, it is necessary to do appropriate correction after checking whether any defect has occurred in the imaging device 11.

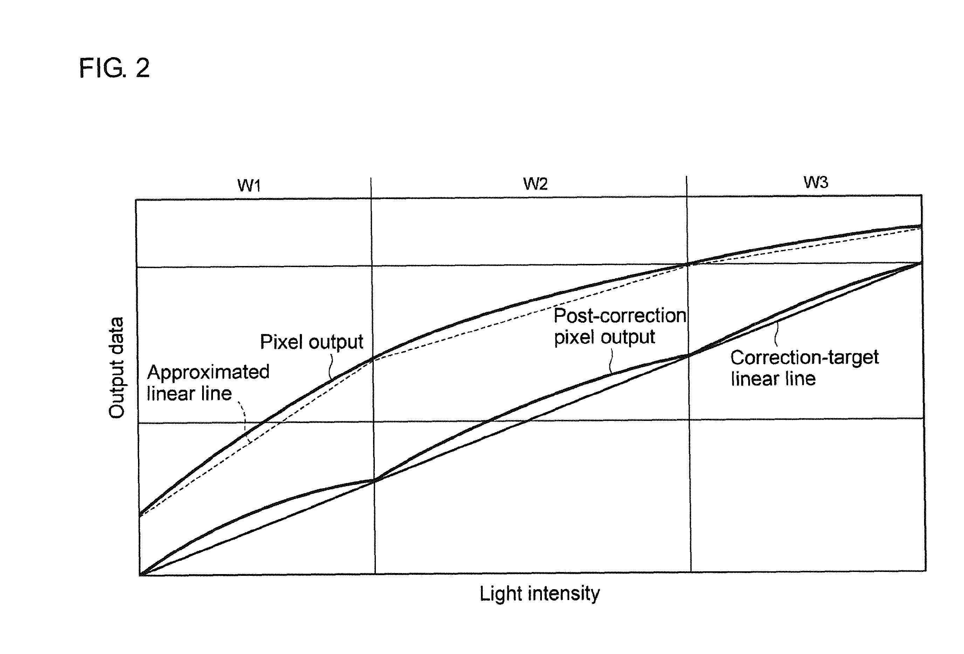

Fig. 2 is a graph explaining an example in which data outputted from good pixels of the imaging device 11 in an imaging apparatus 1 are corrected by NUC process. The abscissa represents intensity of incident light, and the ordinate represents "correction-target linear line", "pixel output", "approximated linear line", and "post-correction pixel output" as output data from a pixel. Here, a method using a collinear approximation is shown. This method is such that while the intensity of light which pixels receive is changed, the output data which are outputted from the pixels according to each light intensity are measured, and upon carrying out collinear approximation of the results of such measurement, the treatment for correction is determined.

The "correction-target linear line" shows a straight line in which the output data linearly changes according to the light intensity received by the pixels constituting an imaging device, and as to the case of most left-hand side where the intensity is 0, the output data is 0. That is, it is an ideal straight line in which the output data linearly increases according to increase in the light intensity, whereas the output data is zero when the light intensity received by the pixels constituting an imaging device is 0 (at dark).

In contrast, the curve shown as a "pixel output" is an example of curve which shows output data from pixels where the intensity of irradiated light is changed. In order to irradiate with light of the same intensity to each pixel of the imaging device 11, a method using an integrating sphere can be adopted. With an integrating sphere, the irradiation of light is performed while changing the light intensity to be irradiated to each pixel of an imaging device respectively, and output data from each pixel is measured depending on the respective light intensities. As to the curve of "pixel output", it is obvious that the output due to dark current occurs even in the case where the light intensity is 0, and the output data increases with the increase in the light intensity, making the curve such that the inclination becomes less steep as the light intensity increases along the sections W1, W2, and W3.

Outputs from pixels in the respective sections W1, W2, and W3 are approximated with a straight line. The result of converting the "pixel output" so that these "approximated linear lines" may change into a "correction-target linear line" is a "post-correction pixel output." Since the approximated linear line is shown by the linear function, the calculation of a correction formula to the straight line shown in the "correction-target linear line" is easy. With the correction formula thus obtained for each section, it becomes possible to make correction so that the same value may be outputted when the same intensity of light is irradiated for the data of a good pixel. This is Non-Uniformity Correction (NUC) process. The light-intensity division and the correction value of sensitivity for performing NUC process are NUC information. The number of sections can be changed appropriately. For example, it is also possible to perform more exact correction by changing the number of sections.

The above-mentioned correction formula is applied to pixels which have been judged to be good ones before shipment, and pixels which have been judged to be defective ones before shipment are interpolated using the output of adjoining good pixels. Also, in the case where there is a pixel which is found to be defective after shipment, it is possible to interpolate the output data of the defective pixel by using the output data of the adjoining good pixel. In either way, it is necessary to specify that the pixels in question are those having defect generated after shipment.

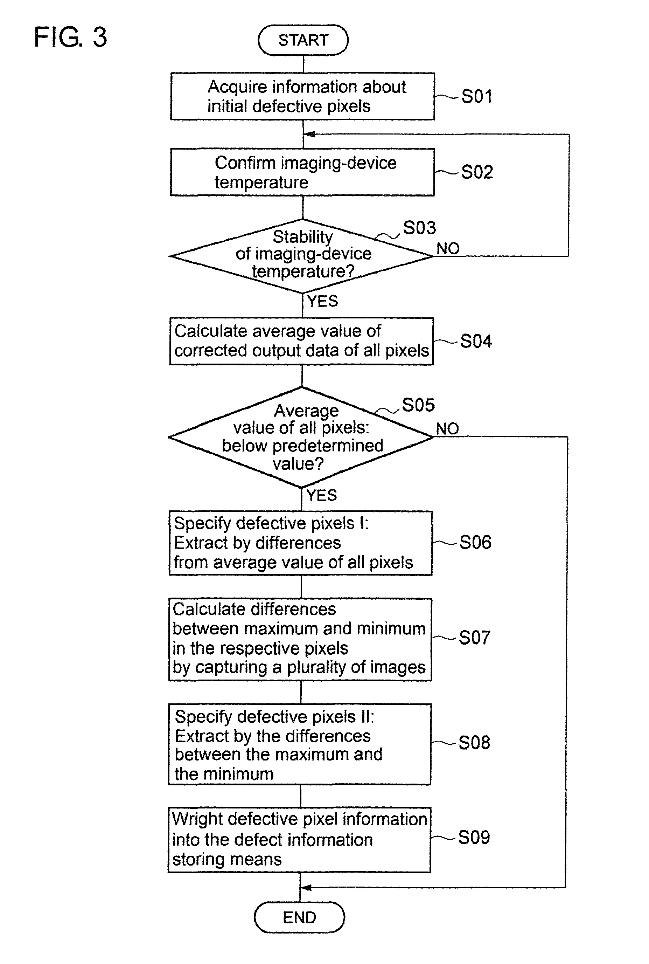

Fig. 3 is a flow chart explaining a method for specifying a pixel having post-shipment defect in the imaging apparatus 1. First, the imaging device 11 is put into a dark state as preparation. This is because the following conduct of specifying defective pixels is performed by using dark data obtained by capturing an image in a dark state. When the controlling means 40 receives a start signal from the controlling signal interface 50 under the condition of the imaging device 11 being put in the dark state, the acquisition of information about initial defective pixels is done in the controlling means 40 (S01). This is the conduct of the controlling means 40 to acquire the information stored in the first memory 20, and it is a process for correcting such output data of pixels having pre-shipment initial defect as included in the captured-image data which is transmitted from the imaging device 11.

Next, after adjusting the temperature in the circumference of the imaging-device 11 with the temperature regulator 13 of the image capturing unit 10, the temperature in the circumference of the imaging-device 11 is measured with the thermometer 12 (S02). Thereby it is confirmed whether the temperature in the circumference of the imaging-device 11 is stable within a predetermined range (S03). Here, if the temperature measured with the thermometer 12 is not stable, the adjustment of temperature in the circumference of the imaging-device 11 is continued with the temperature regulator 13. The reason for previously checking whether the temperature is stable is because the change of temperature significantly influences the amount of dark current.

Next, if the temperature in the circumference of the imaging-device 11 is stabilized, the controlling means 40 acquires one frame of captured-image data by capturing image in each pixel of the imaging device 11 from the image capturing unit 10. And, the correction process is performed using the initial defect information and NUC information which have been stored in the first memory 20. Thereby, corrected captured-image data is generated. Subsequently, the average value of all pixels is computed from the corrected output data of all the pixels contained in corrected captured-image data (S04). Subsequently, judgment is done as to whether the average value of all pixels thus computed is below a predetermined value (S05). Here, if the average value of all pixels is larger than the predetermined value, the darkening against the imaging device 11 is judged to be insufficient and it is judged that the preparation for specifying a defective pixel is not made, and the process relating to specifying a defective pixel is interrupted. If the average value of all pixels is below the predetermined value, the darkening is judged to be fully made and the process relating to specifying a defective pixel is continued.

The first method for specifying a defective pixel is to compute the difference between the average value of all pixels and the corrected output data for each pixel in the controlling means 40. Then, a pixel in which the difference between the average value of all pixels and the corrected output data exceeds a predetermined threshold value is judged to be a defective pixel, and such pixel is extracted (S06). In the case where the difference between the average value of all pixels and the corrected output data of each pixel exceeds the predetermined threshold value, such pixel is judged to be an unusual pixel which shows output data that is significantly different from other pixels in the same dark state. Such judgment makes it possible to extract pixels having sensitivity abnormalities, such as those having short-circuited with an adjoining pixel and those having lost sensitivity as a result of failure of an electrode to open.

Next, the second method for specifying a defective pixel is to specify defective pixels which exhibit variation in output data depending on time. For that purpose, first of all, a plurality of frames of images are captured in the imaging device 11 in a continuing dark state, and the controlling means 40 acquires these dark data. Such a plurality of frames acquisition of dark data is performed at a predetermined interval on the order of seconds, for example. The acquisition of such dark data is carried out while the correction process is performed using the initial information stored in the first memory 20. Consequently, corrected captured-image data is generated according to the number of sheets of captured images.

Subsequently, with reference to a plurality of corrected captured-image data, the maximum and the minimum of corrected output data in the same pixel are extracted in the controlling means 40, and the difference between them is calculated (S07). Then, pixels which have a value exceeding a predetermined threshold value are extracted, being judged to be defective pixels (S08). In the case where the difference between the maximum and the minimum of corrected output data in the post-correction corrected captured-image data exceeds the predetermined threshold value in spite of acquisition of a plurality of frames of dark data, such pixels are judged to be abnormal pixels whose output data is unstable.

The information relating to the defective pixels specified by the above-mentioned two methods is written into and stored in the second memory 30 (S09). Thus, the process relating to specifying defective pixels is accomplished. In addition, with respect to the defective pixels specified by the above-mentioned methods, correction is performed based on the information stored in the second memory after the image of the imaging target is captured. Therefore, when the image of an imaging target is captured using the imaging apparatus 1, the captured-image data is sent to the controlling means 40 from the imaging device 11, and thereafter the output data in a pixel in which a defect has occurred is interpolated using the output data of the adjoining good pixel, based on information for specifying a defective pixel, which information is stored in the second memory 30, as well as information for specifying an initial defective pixel, which information is stored in the first memory 20. And, thereafter, captured-image data thus corrected is outputted from the image data interface 60.

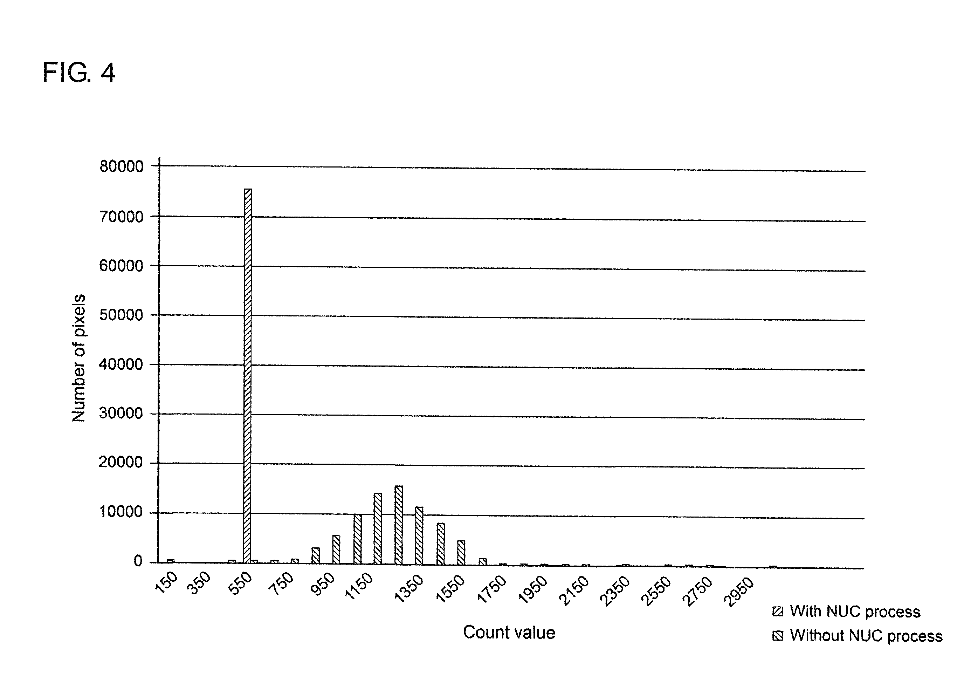

Fig. 4, which is a histogram showing output distribution in all pixels in terms of "with NUC process" and "without NUC process", is a figure explaining the effect of specifying a defective pixel and correcting the output data in the defective pixel. In the case of "without NUC process", the distribution of count values of respective pixels are broad with the count value 1200 as its center, but in the case of "with NUC process", the count values of almost all pixels are in the neighborhood of 550. In this manner, the variation in the output data of each pixel under the same conditions can be lessened by performing NUC process, and accordingly a slight output change is detectable. Therefore, it is possible to detect a slightly defective pixel which has conventionally been overlooked. As a result, it is possible to detect a minute change such as a change of color tone, for example, in the imaging apparatus 1.

With the imaging apparatus 1, as described above, defective pixels are specified based on the corrected captured-image data after NUC process with respect to initial good pixels, as well as correction with respect to initial defective pixels, has been done to captured-image data, and consequently it is possible to specify defective pixels with higher precision as compared with the case where defective pixels are specified without carrying out the NUC process and correction with respect to initial defective pixels. It is possible to correct the captured-image data acquired by defective pixels other than initial defective pixels, since pixels in which defects other than an initial defect can be specified by detecting a defective pixel in the specifying unit. In addition, it is possible to specify defective pixels with higher precision without suffering from the effect of temperature change, since the defective pixels can be specified while the temperature is adjusted according to the results of measuring the temperature in the circumference of a plurality of pixels by providing the thermometer 12 and the temperature regulator 13.

The results of specifying defective pixels are stored in the second memory by providing a structure in which writing into the first memory is forbidden while the second memory is provided. Also, even if the information stored in the second memory disappears as a result of the momentary outage of the imaging apparatus during the time of writing into the second memory, it does not affect the information stored in the first memory, and it is possible to appropriately perform the correction based on the initial defective pixel information and NUC information.

The embodiments of the present invention are not limited to those described above, and the present invention can be modified in various ways. For example, in the above-mentioned embodiment, two methods are used as a method for extracting a defective pixel; however, it is possible to extract a defective pixel by using either one of them. Also, by providing a spectrum means further, the above-mentioned imaging apparatus can be used as a camera for capturing a hyper-spectral image.

## Claims

1. An imaging apparatus comprising:
an image capturing unit consisting of a plurality of pixels arranged in a matrix and capable of outputting a captured-image data made of output data of each pixel, wherein the output data is made by receiving light and carrying out optical-to-electrical conversion thereof;
a first memory capable of memorizing information for specifying an initial defective pixel among the plurality of pixels and NUC information of an initial good pixel;
a correction unit for converting the output data into a corrected output data according to the information for specifying the initial defective pixel and the NUC information and making a corrected captured-image data consisting of the corrected output data; and
a specifying unit for specifying a defective pixel different from the initial defective pixel according to the corrected captured-image data.

2. The imaging apparatus as set forth in claim 1, wherein
the image capturing unit has a thermometer for measuring temperature in the circumference of the plurality of pixels and outputting the results of such measurement and a temperature regulator for making temperature adjustment according to the results of the measurement.

3. The imaging apparatus as set forth in claim 1 or 2, further comprising
a second memory for memorizing information regarding the defective pixel, wherein writing into the first memory is forbidden.

4. The imaging apparatus as set forth in any one of claims 1 to 3, wherein
the specifying unit specifies the defective pixel on the basis of corrected captured-image data made by correcting a captured-image data outputted when the plurality of pixels are at dark.

5. The imaging apparatus as set forth in claim 4, wherein
the specifying unit calculates the average value of corrected output data of all pixels contained in the corrected captured-image data, calculates a difference between the average value and the corrected output data of the respective pixels in the corrected output-image data, and specifies a pixel as the defective pixel if the difference exceeds a predetermined threshold value.

6. The imaging apparatus as set forth in claim 4 or 5, wherein
the specifying unit specifies a pixel among the plurality of corrected captured-image data as the defective pixel if the variation range of a corrected output data of the same pixel exceeds a predetermined threshold.

7. An image capturing method comprising steps of:
receiving light from an imaging target by a pixel consisting of the plurality of optical-to-electrical conversion devices arranged in a matrix in an imaging apparatus;
interpolating, with the output data of the respective adjoining good pixel, an output data of an initial defective pixel among the plurality of pixels and an output data of a defective pixel that is different from the initial defective pixel and is specified on the basis of a corrected captured-image data consisting of the corrected output data that is converted from the output data according to the information for specifying the initial defective pixel and NUC information of an initial good pixel; and
outputting the captured-image data thus interpolated.
